# EUROPEAN PATENT APPLICATION

(11) **EP 4 722 320 A1**
(43) Date of publication of application: **08.04.2026**
(21) Application number: 24815399.1
(22) Date of filing: 24.05.2024
(51) Int. Cl.: C10M 169/02, C10M 107/38, C10M 119/22, F16C 19/06, F16C 33/66, C10N 30/00, C10N 40/02

(54) **ROLLING BEARING AND ACTUATOR**

(30) Priority: 26.05.2023 JP 2023087250
(71) Applicant: NSK LTD., Tokyo 141-8560 (JP)
(72) Inventor: YAMAMOTO Kouta, Fujisawa-shi, Kanagawa 251-8501 (JP); HASEGAWA Shinji, Fujisawa-shi, Kanagawa 251-8501 (JP); TODA Yuujirou, Fujisawa-shi, Kanagawa 251-8501 (JP); SAKAMOTO Tadahiko, Fujisawa-shi, Kanagawa 251-8501 (JP); KITAMURA Shunsuke, Fujisawa-shi, Kanagawa 251-8501 (JP)
(74) Representative: Grünecker Patent- und Rechtsanwälte PartG mbB
(86) International application number: PCT/JP2024/019185
(87) International publication number: WO 2024/247916

(57) **Abstract**

Provided are a rolling bearing that can be used in a highly clean environment, can prevent deterioration of grease used as a lubricant, and can reduce the amount of dust generated not only before decontamination but also after decontamination with hydrogen peroxide or the like, and an actuator including the rolling bearing. A rolling bearing (1) is filled with grease containing a base oil and a thickener. The base oil contains a fluorine oil, and the thickener contains polytetrafluoroethylene resin powder. A worked penetration of the grease is 200 or more and 295 or less.

## Description

### TECHNICAL FIELD

The present invention relates to a rolling bearing and an actuator including the rolling bearing.

### BACKGROUND ART

In the related art, rolling bearings have been widely used in the fields of mechanical devices, vehicles, and the like. In particular, rolling bearings lubricated with fluorine grease, which uses fluorine oil as a base oil, for example, are used to support a rotating portion of a rotating device used in a clean environment, a vacuum environment, or a high-temperature environment. Specifically, lubrication is performed by filling an internal space of the rolling bearing with fluorine grease.

It is a well-known fact that a rolling bearing in actuators generates particles from a lubricant when the device is in operation. Therefore, when actuators are used in the various fields mentioned above, there is a demand for reducing particles generated from the rolling bearing.

In particular, in various fields such as food manufacturing facilities, the electronics industry, the chemical industry, and medical care, an even cleaner environment is required. For example, devices used in the field of regenerative medicine include a cell culture device for manipulating cells, a cell layering device, and the like. In the field of regenerative medicine, the environment surrounding the device is required to be kept extremely clean, as there is a possibility that non-cellular substances, such as particles generated from the lubricant, may be mixed into the cells and adversely affect the cells. Therefore, devices used in the field of regenerative medicine are subjected to a decontamination process in which the devices are exposed to hydrogen peroxide or the like in order to reduce the number of bacteria to a certain level.

Incidentally, Patent Literature 1 discloses a rolling bearing filled with a grease composition that contains specific polytetrafluoroethylene (PTFE) fine particles in an amount of 30% by mass or more and 90% by mass or less of the total amount of the grease composition and that uses a fluorine oil as a base oil. The rolling bearing contains a reduced amount of PFOA (perfluorooctanoic acid) compounds, which have an adverse effect on the global environment, and therefore volatilization and scattering that accompanies the use of the rolling bearing can be reduced.

### CITATION LIST

### PATENT LITERATURE

Patent Literature 1: JP2023-012700A

### SUMMARY OF INVENTION

### TECHNICAL PROBLEM

However, the rolling bearing described in Patent Literature 1 does not take into consideration the above-mentioned decontamination. For example, if a rolling bearing in which grease is sealed is exposed to hydrogen peroxide or the like, the grease may deteriorate and may not be able to maintain the desired lubricity. Further, deterioration of the grease significantly increases the amount of dust generated. In rolling bearings in the related art, it is not possible to prevent deterioration of the grease, particularly after the decontamination process, and it is also not possible to sufficiently reduce the amount of dust generated.

The present invention has been made in view of such problems, and an object of the present invention is to provide a rolling bearing that can be used in a highly clean environment, can prevent deterioration of grease used as a lubricant, and can reduce the amount of dust generated even when exposed to hydrogen peroxide or the like, and an actuator including the rolling bearing.

### SOLUTION TO PROBLEM

An object of the present disclosure is achieved by the following configuration (1) related to a rolling bearing.
(1) A rolling bearing in which grease containing a base oil and a thickener is sealed, in which
   the base oil contains a fluorine oil,
   the thickener contains a polytetrafluoroethylene resin powder, and
   a worked penetration of the grease is 200 or more and 295 or less.
   Preferred embodiments of the present invention related to the rolling bearing relate to the following (2) to (8).
(2) In the rolling bearing according to (1), a kinematic viscosity of the base oil at 40°C is 10 mm²/s or more and 200 mm²/s or less.
(3) In the rolling bearing according to (1) or (2), the fluorine oil is perfluoropolyether.
(4) In the rolling bearing according to any one of (1) to (3), a content of the thickener with respect to a total mass of the grease is 30% by mass or more and 50% by mass or less.
(5) In the rolling bearing according to any one of (1) to (4), a specific gravity of the grease is 1.50 or more.
(6) In the rolling bearing according to any one of (1) to (5), an oxidation stability of the grease is 10 kPa or less.
(7) In the rolling bearing according to any one of (1) to (6), the rolling bearing is used in an environment exposed to an atmosphere containing at least one of hydrogen peroxide and peracetic acid.
(8) In the rolling bearing according to any one of (1) to (7), the rolling bearing is included in a device used in a regenerative medicine field.
   An object of the present disclosure is achieved by the following configuration (9) related to an actuator.
(9) An actuator including:
   the rolling bearing according to any one of (1) to (8);
   a ball screw supported by the rolling bearing; and
   a linear guide configured to guide a moving direction of a member moved by the ball screw.
   Preferred embodiments of the present invention related to the actuator relate to the following (10) to (11).
(10) In the actuator according to (9), a low-temperature chromium fluoride plating film is formed on a surface of the ball screw and a surface of the linear guide.
(11) In the actuator according to (9) or (10), the actuator is used in an environment exposed to an atmosphere containing at least one of hydrogen peroxide and peracetic acid, and is not provided with a cover that covers the rolling bearing, the ball screw, and the linear guide.

### ADVANTAGEOUS EFFECTS OF INVENTION

The rolling bearing according to the present invention specifies the base oil and thickener of the grease to be sealed and appropriately controls the worked penetration of the grease, thereby preventing deterioration of the grease and allowing the rolling bearing to maintain excellent low dust generation characteristics even after being exposed to hydrogen peroxide or the like.

Further, since the actuator according to the present invention is equipped with the above-mentioned rolling bearing, it is possible to reduce deterioration of actuator performance due to deterioration of the grease, particles generated from the grease, or the like, and to achieve long-term operation at low cost.

### BRIEF DESCRIPTION OF DRAWINGS

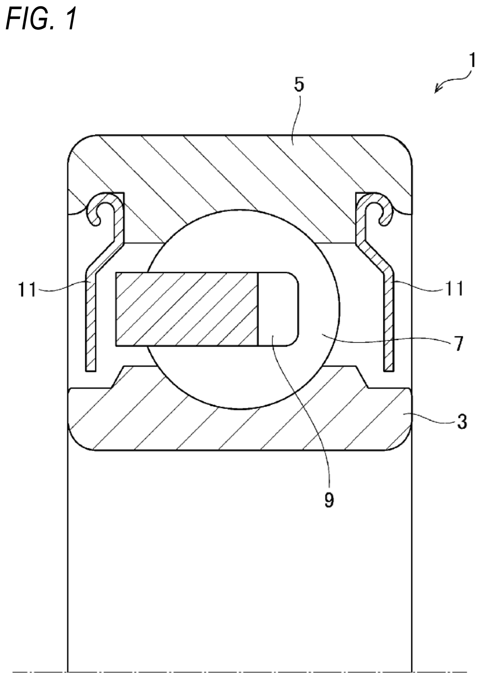

[Fig. 1] Fig. 1 is a schematic cross-sectional view showing a rolling bearing according to the present embodiment.

### DESCRIPTION OF EMBODIMENTS

The present inventors have conducted extensive research into technologies for achieving low dust generation characteristics for an actuator used in an environment requiring high cleanliness (hereinafter referred to as a clean environment) and for a rolling bearing provided within the actuator. As a result, the present inventors have found that by strictly adjusting the material and physical properties of the grease used as a lubricant, it is possible to prevent the grease from deteriorating even when placed in an environment exposed to hydrogen peroxide, or the like, and therefore maintain the low dust generation characteristics of the grease. The present invention has been made based on these findings.

Note that, although an environment in which the rolling bearing is exposed to an atmosphere containing hydrogen peroxide or the like is hereinafter referred to as decontamination, the above-mentioned environment is not limited to decontamination. For example, the environment includes cases where the rolling bearing is used in industrial applications that use hydrogen peroxide or peracetic acid.

Hereinafter, an embodiment of the present disclosure will be described in detail. It should be noted that the present invention is not limited to the embodiments described below, and can be freely modified and implemented without departing from the gist of the present invention.

### [Rolling Bearing]

Fig. 1 is a schematic cross-sectional view showing a rolling bearing according to the present embodiment. In Fig. 1, a deep groove ball bearing is taken as an example of a rolling bearing 1, and the configuration thereof will be briefly described. The rolling bearing 1 includes: an annular inner ring 3; an annular outer ring 5 disposed on an outer periphery of the inner ring 3; a plurality of balls (rolling elements) 7 incorporated between the inner ring 3 and the outer ring 5 via a cage 9 in a rollable manner; a shield 11 that seals the inside of the bearing, and grease (not shown) sealed in a space closed by the shield 11. The rolling bearing 1 shown in Fig. 1 is provided with the shield 11 described above, but in this embodiment, the configuration of the rolling bearing 1 is not limited, and the shield 11 may not be provided. That is, the rolling bearing according to the present embodiment is characterized by the grease, and the grease will be described in detail below.

### <Grease>

The grease contains a base oil and a thickener. The base oil contains a fluorine oil, and the thickener contains polytetrafluoroethylene (PTFE) resin powder. The grease containing fluorine oil and PTFE has excellent high-temperature and low-temperature properties, as well as extremely excellent oxidation stability. Therefore, the rolling bearing in which the grease is sealed can prevent the occurrence of rust and the like, and can maintain high performance of the rolling bearing.

Examples of the fluorine oil include perfluoropolyether (PFPE) and chlorotrifluoroethylene (CTFE), and among these, PFPE is preferably used.

### (Worked Penetration of Grease: 200 or more and 295 or less)

The worked penetration is a numerical value that indicates the hardness of the grease, and the harder the grease, the smaller the numerical value. In the related art, in order to reduce the amount of dust generated, that is, to improve the low dust generation characteristics, hard grease has been commonly used. In the present embodiment, the worked penetration of the grease is appropriately specified within a range of values higher than that in the related art, which is considered to improve the property of preventing deterioration of the grease, that is, the deterioration resistance not only before decontamination but also after decontamination. As a result, it is considered that the rolling bearing can maintain excellent low dust generation characteristics and can secure a clean environment.

It is presumed that if the worked penetration exceeds 295, the grease becomes too soft, making it more likely to scatter and contaminate the outside. Therefore, the worked penetration of the grease is set to 295 or less, preferably 285 or less, and more preferably 275 or less. Meanwhile, if the worked penetration is less than 200, the grease becomes too hard, and is presumed to be unable to absorb excessive stress, resulting in a change in composition, making the grease more susceptible to the effects of decontamination, and causing deterioration in dust generation due to the deterioration of the grease. In addition, it is difficult to fill the rolling bearing with grease at room temperature. Therefore, the worked penetration of the grease is set to 200 or more, preferably 210 or more, and more preferably 220 or more. The worked penetration of the grease can be measured in accordance with JIS K 2220:2013.

### (Kinematic Viscosity of Base Oil at 40°C: 10 mm²/s or more and 200 mm²/s or less)

By using a base oil with an appropriately adjusted kinematic viscosity and adjusting the worked penetration of the grease as described above, the torque characteristics of the rolling bearing can be significantly improved. If the kinematic viscosity of the base oil at 40°C is 10 mm²/s or more, desired lubricity can be obtained. Therefore, the kinematic viscosity of the base oil at 40°C is preferably 10 mm²/s or more, more preferably 30 mm²/s or more, and even more preferably 50 mm²/s or more.

Meanwhile, if the kinematic viscosity of the base oil at 40°C is 200 mm²/s or less, an increase in frictional resistance can be reduced, and even better torque reduction can be achieved. Therefore, the kinematic viscosity of the base oil at 40°C is preferably 200 mm²/s or less, more preferably 150 mm²/s or less, and even more preferably 100 mm²/s or less. The kinematic viscosity of the base oil can be measured in accordance with JIS K 2283:2000.

### (Thickener Content: 30% by mass or more and 50% by mass or less)

The worked penetration of the grease is affected by the type of base oil used and the content of the thickener. When the content of the thickener is 30% by mass or more with respect to the total mass of the grease, the properties as the grease can be secured, and the worked penetration of the grease can be easily adjusted to 295 or less. Therefore, the content of the thickener with respect to the total mass of the grease is preferably 30% by mass or more. Meanwhile, when the content of the thickener is 50% by mass or less with respect to the total mass of the grease, the worked penetration of the grease can be easily adjusted to 200 or more. Therefore, the content of the thickener with respect to the total mass of the grease is preferably 50% by mass or less, more preferably 40% by mass or less, and even more preferably 30% by mass or less.

### (Specific Gravity of Grease: 1.50 or more)

The specific gravity of the grease is affected by the content of the thickener, the type of the base oil, and the like, and is also closely related to the worked penetration of the grease. When the specific gravity of the grease is 1.50 or more, the hardness of the grease is likely to fall within a desired range, the deterioration of the grease is prevented even after decontamination, and excellent low dust generation characteristics and torque characteristics can be maintained. Therefore, the specific gravity of the grease is preferably 1.50 or more, and more preferably 1.80 or more. The specific gravity of the grease can be measured in accordance with JIS K 2249-1:2011.

### (Oxidation Stability of Grease: 10 kPa or less)

By appropriately selecting the base oil and the thickener contained in the grease, the oxidation stability of the grease can be improved. The oxidation stability of the grease can be expressed by the oxidation stability. When the oxidation stability of the grease is 10 kPa or less, the grease does not deteriorate even after decontamination, excellent low dust generation characteristics can be maintained, and the performance of the rolling bearing can be maintained at a good level. Therefore, the oxidation stability of the grease is preferably 10 kPa or less, and more preferably 5 kPa or less. The oxidation stability of the grease can be measured in accordance with JIS K 2220:2013.

### (Additives in Grease)

The grease sealed in the rolling bearing according to the present embodiment may contain a fluorine oil as a base oil and polytetrafluoroethylene resin powder as a thickener, or may contain various additives in order to further improve various performance characteristics. The content of the additives relative to the total mass of the grease is not particularly limited as long as it is within a range that does not impair the object of the present invention.

### <Rolling Bearing Operating Environment>

The rolling bearings in the related art have a problem that when decontamination is carried out using hydrogen peroxide and peracetic acid, the grease deteriorates and the low dust generation characteristics deteriorate. Further, in order to prevent a decrease in the low dust generation characteristics, it is necessary to attach a cover to cover the rolling bearing, the ball screw, the linear guide and the like to prevent the grease from deteriorating. On the other hand, in the present embodiment, there is no need to attach a cover, and even after the above-mentioned decontamination is carried out, excellent low dust generation characteristics and torque characteristics can be maintained. Therefore, the rolling bearing according to the present embodiment is preferably used in an environment where it is exposed to an atmosphere containing at least one of hydrogen peroxide and peracetic acid, and more preferably used in an environment where it is exposed to an atmosphere containing hydrogen peroxide.

Fields in which the rolling bearing is used in an environment where it is exposed to an atmosphere containing hydrogen peroxide or peracetic acid include the medical and pharmaceutical field, paper and pulp field, textile field, chemical industry field, electronics industry field, pollution treatment field, mining field, food field, metal finishing processing field, and wood processing field.

Specifically, in the medical and pharmaceutical field, hydrogen peroxide or peracetic acid is used when decontaminating a manufacturing device for regenerative medicine products, when producing hydrogen peroxide, and as intermediate raw materials for pharmaceuticals. In the paper and pulp field, hydrogen peroxide or peracetic acid is used for bleaching various pulps and for deinking and bleaching waste paper. In the textile field, hydrogen peroxide or peracetic acid is used to bleach natural fibers such as cotton, wool, and silk, as well as synthetic fibers. In the chemical industry field, hydrogen peroxide or peracetic acid is used as raw materials for organic and inorganic peroxides, raw materials for organic compounds, and raw materials for epoxy compounds. In the electronics industry field, hydrogen peroxide or peracetic acid is used in etching and cleaning semiconductors and etching and cleaning printed circuit boards. In the pollution treatment field, hydrogen peroxide or peracetic acid is used for sewage treatment, industrial wastewater treatment (deodorization, bacteria removal, decolorization), and soil improvement. In the mining field, hydrogen peroxide or peracetic acid is used to oxidize metals during a smelting process. In the food field, hydrogen peroxide or peracetic acid is used for sterilization of food manufacturing facilities and sterilization of containers. In the metal finishing processing field, hydrogen peroxide or peracetic acid is used for surface treatment of metals and purification of a plating solution. In the wood processing field, hydrogen peroxide or peracetic acid is used for bleaching wood and decorative sheets.

As described above, a device used in the field of regenerative medicine is required to prevent mix-up of products, cross contamination, and the like, and to reduce the number of microorganisms living in the building or facility to a pre-specified bacterial count level. For this reason, the device used in the field of regenerative medicine is subjected to a decontamination process in which the device is exposed to hydrogen peroxide or the like in order to reduce the number of bacteria to a certain level. Therefore, the rolling bearing according to the present embodiment is preferably included in a device used in the medical and pharmaceutical fields, and particularly preferably included in a device used in the field of regenerative medicine.

In the field of regenerative medicine, examples of a method for decontaminating the inside of a working chamber include a method of evaporating and diffusing hydrogen peroxide. Specifically, hydrogen peroxide vaporized by a heater is diffused inside the isolator or in the working chamber, and the oxidizing power of the hydrogen peroxide can kill microorganisms.

### [Actuator]

The actuator according to the present embodiment includes: the rolling bearing according to the present embodiment; a ball screw supported by the rolling bearing; and a linear guide that guides a moving direction of a member moved by the ball screw. The actuator configured in this manner is equipped with the rolling bearing according to the present embodiment, which has excellent low dust generation characteristics, and therefore can maintain excellent quality.

It is preferable that a low-temperature chromium fluoride plating film is formed on a surface of the ball screw and a surface of the linear guide. Since the low-temperature chromium fluoride plating film has excellent corrosion resistance, by forming it on the surfaces of the ball screw and linear guide, the actuator according to the present embodiment can be used in an even cleaner environment. It is more preferable that the ball screw and linear guide are made of stainless steel.

### <Actuator Operating Environment>

As described above, the rolling bearing according to the present embodiment is suitable for use in an environment where it is exposed to an atmosphere containing hydrogen peroxide. Therefore, the actuator including the rolling bearing is also excellent in resistance to the atmosphere containing hydrogen peroxide. The fields in which the actuator is used in an environment exposed to an atmosphere containing hydrogen peroxide and specific examples of the use are as described above, and it is particularly preferable to use the actuator according to the present embodiment in the field of regenerative medicine.

In the related art, when an actuator is used in an environment where it is exposed to hydrogen peroxide, covers are usually attached to the rolling bearings, ball screws, and linear guides to prevent particles and the like from scattering from the rolling bearings and ball screws. In this regard, in the actuator according to the present embodiment, even when exposed to an environment containing hydrogen peroxide or the like, the grease does not deteriorate, and excellent low dust generation characteristics and torque characteristics can be maintained. Therefore, it is not necessary to attach a cover for covering the rolling bearing, the ball screw, and the linear guide, and it is possible to decontaminate the rolling bearing, the ball screw, and the linear guide without deteriorating the performance of the actuator. Therefore, the time and cost required for maintaining the actuator can be reduced, and long-term operation can be achieved at low cost.

### Examples

Hereinafter, the present invention will be described in more detail with reference to Inventive Examples and Comparative Examples, but the present invention is not limited to these Examples, and can be carried out with modifications within a range suitable for the gist of the present invention, and all of them are included in the technical scope of the present invention. Various conditions described below are merely examples, and the present invention is not limited to the following conditions.

### [Experiment 1]

Rolling bearings of Inventive Example No. 1 and Comparative Example No. 1 were produced by changing the type of grease, and experiments were conducted to evaluate the cleanliness (low dust generation characteristics) and deterioration resistance. The procedure of the experiment is as follows.

### <Grease Adjustment>

A thickener and a base oil were mixed to prepare grease for the rolling bearing of Inventive Example No. 1. Further, lithium soap and base oil were mixed to prepare grease for the rolling bearing of Comparative Example No. 1. In Inventive Example No. 1, a blending ratio of the thickener to the base oil was 33:67. The grease materials are listed below. In addition, the kinematic viscosity of the base oil used in the grease was measured at 40°C and 100°C in accordance with JIS K 2283:2000.

### (Grease for Rolling Bearing of Inventive Example No. 1)

Thickener: PTFE (polytetrafluoroethylene)
Base oil: (linear) PFPE (perfluoropolyether)
   (Grease for Rolling Bearing of Comparative Example No. 1)
Lithium soap
Base oil: mineral oil + poly-α-olefin

### <Measurement of Grease Properties>

### (Measurement of Worked Penetration, Specific Gravity, and Oxidation Stability)

The worked penetration of the obtained grease was measured in accordance with JIS K 2220:2013. Further, the specific gravity of the grease was measured in accordance with JIS K 2249-1:2011. Further, the oxidation stability of the grease was measured in accordance with JIS K 2220:2013. The grease materials, the kinematic viscosity of the base oil, and the measured values of the grease are shown in Table 1 below.

### <Evaluation of Rolling Bearings>

The obtained grease was sealed so as to substantially fully fill in a space volume of the rolling bearing, and the rolling bearing was incorporated into an actuator (manufactured by NSK Ltd., model number: XY-HS0005-734) to produce an actuator for evaluation. The ball screw and linear guide incorporated into the actuator for evaluation were made of SUS440C, and had a low-temperature chromium fluoride plating film formed on the surface. Then, using the actuator for evaluation, a cleanliness evaluation test before decontamination and after decontamination, and an evaluation test for deterioration resistance were carried out. The test methods and evaluation criteria for each evaluation test are described in detail below. The evaluation results of each test are also shown in Table 1 below.

### (Method for Cleanliness Evaluation Test (Before Decontamination))

The actuator for evaluation was operated for at least 180 minutes in an environment of 23°C and 50% Rh, with an operating speed of 50 mm/s (1500 min⁻¹), an acceleration-deceleration rate of 200 mm/s², and a vertical arrangement. Then, from the start to the end of operation, the amount of dust generated from the actuator for evaluation was measured using a particle counter (Portable Airborne Particle Counter MET ONE Model 3411, manufactured by Beckman Coulter, Inc.).

### (Evaluation Criteria for Cleanliness (Before Decontamination))

The low dust generation characteristics before decontamination were evaluated as to whether Class 100 was satisfied, based on US Federal Standard 209E (FED STD). That is, when the number of particles of 0.5 µm or more in one cubic foot (1 ft³) was 100 (pieces/ft³) or less, it was regarded as passing (∘). On the other hand, measurements were continued from the start to the end of operation, and a case where the number of particles of 0.5 µm or more in one cubic foot (1 ft³) exceeded 100 (particles/ft³) was regarded as failing (×).

The evaluation criteria for particle quantity (number of particles) were based on FED STD 209E.

### (Method for Deterioration Resistance Evaluation Test)

The molecular structure of the grease in the actuator for evaluation was analyzed in advance using Fourier Transform Infrared Spectroscopy (FT-IR). The actuator for evaluation was then placed inside a safety cabinet, and a hose connected to the hydrogen peroxide gas decontamination system was passed through the safety cabinet to form a circulating flow system. The decontamination operation was performed so as to use up all 30 ml of the 60% hydrogen peroxide concentrated solution, and decontamination was carried out. The safety cabinet was sealed to prevent the hydrogen peroxide gas from leaking from inside. Thereafter, the molecular structure of the grease in the actuator for evaluation after decontamination was analyzed by FT-IR. The devices used are shown below.
Safety cabinet: Manufactured by Japan Airtech Co., Ltd., model number BHC-1310IIA2, space volume approximately 0.5 m³
Hydrogen peroxide gas decontamination system: Optima Corporation, model number PASSTECH S1
FT-IR: BRUKER, infrared spectrophotometer, model ALPHA II

### (Evaluation Criteria for Deterioration Resistance)

The FT-IR results of the grease in the actuator for evaluation before decontamination and the grease in the actuator for evaluation after decontamination were compared, and a test that showed little change in peak before and after decontamination was evaluated as passing (∘). On the other hand, if a significant peak was observed after decontamination, the test was evaluated as failing (×).

### (Method for Cleanliness Evaluation Test (After Decontamination))

Using the actuator for evaluation subjected to decontamination by the above-described deterioration resistance test, the actuator for evaluation was operated in the same manner as in the method for cleanliness evaluation test before decontamination, and the amount of dust generated was measured.

### (Evaluation Criteria for Cleanliness (After Decontamination))

The evaluation criteria for cleanliness after decontamination were the same as the evaluation criteria before decontamination.

**[Table 1]**

| Rolling bearing No. | | Material for grease | | Base oil | | Grease | | | Evaluation results | | |
|---|---|---|---|---|---|---|---|---|---|---|---|
| | | Thickener | Base oil | Kinematic viscosity (mm²/s) | | Worked penetration | Specific gravity | Oxidation stability (kPa) | Cleanliness (low dust generation characteristics) | | Deterioration resistance |
| | | | | 40°C | 100°C | | | | Before decontamination | After decontamination | |
| Inventive Example | 1 | PTFE | (Linear) PFPE | 65 | 15 | 265 | 1.98 | 5 | ○ | ○ | ○ |
| Comparative Example | 1 | Li soap | Mineral oil + poly-α-olefin | 32 | 5.4 | 199 | 0.90 | 20 | ○ | × | × |

As shown in Table 1 above, the material and worked penetration of the grease in the rolling bearing of Inventive Example No. 1 were within the ranges specified in the present invention, and therefore had excellent deterioration resistance, and not only did it have excellent low dust generation characteristics before decontamination, but also maintained the low dust generation characteristics after decontamination. On the other hand, the material and worked penetration of the grease in the rolling bearing of Comparative Example No. 1 were out of the ranges specified in the present invention, and therefore the evaluation result for deterioration resistance was poor, the grease deteriorated after decontamination, and the low dust generation characteristics after decontamination also deteriorated. From these results, it was shown that the rolling bearing of Inventive Example No. 1 is particularly suitable for a device used in a clean environment. Specifically, it was shown that even when strict decontamination is carried out, such as in the field of regenerative medicine, an increase in the amount of dust generated can be prevented and the excellent performance of the rolling bearing can be maintained.

### [Experiment 2]

Two types of grease falling within the range specified in the present invention were prepared, rolling bearings of Inventive Example No. 1 and Inventive Example No. 2 were prepared by filling the rolling bearings with these greases, and an experiment was conducted to evaluate the torque characteristics. The procedure of the experiment is as follows.

### <Grease Adjustment>

In the same manner as in Experiment 1 above, the grease for the rolling bearing of Inventive Example No. 1 was adjusted. Further, the grease for the rolling bearing of Inventive Example No. 2 was adjusted by changing the ratio of the fluorine oil and thickener used in the base oil. Further, in the same manner as in Experiment 1, the kinematic viscosity of the base oil used in the grease was measured, and the worked penetration, specific gravity and oxidation stability of the grease were also measured.

### <Evaluation of Rolling Bearings>

The obtained grease was sealed into the rolling bearing in the same manner as in Experiment 1 above, and an actuator for evaluation that includes the rolling bearing was prepared. Then, the torque characteristics were evaluated using the actuator for evaluation. The test methods and evaluation criteria for torque characteristics are described in detail below.

### (Method for Torque Characteristics Evaluation Test)

The prepared actuator for evaluation was operated at an operating speed of 50 mm/s (1500 min⁻¹), an acceleration-deceleration rate of 200 mm/s², and in a vertical arrangement, the operating torque of the motor was measured, and whether the operation was normal was checked. The actual operating torque of the motor was measured using software (support software MEXE02, manufactured by Oriental Motor Co., Ltd.).

### (Evaluation Criteria for Torque Characteristics)

If the actuator for evaluation operated without any problems, it was evaluated as passing (∘), and if the actuator for evaluation had insufficient motor power and stopped operating, it was evaluated as failing (×). The evaluation results of the kinematic viscosity of the base oil, the worked penetration, specific gravity, and oxidation stability of the grease, and torque characteristics of Inventive Example No. 1 and Inventive Example No. 2 are shown in Table 2 below.

**[Table 2]**

| Rolling bearing No. | | Material for grease | | Base oil | | Grease | | | Evaluation results |
|---|---|---|---|---|---|---|---|---|---|
| | | Thickener | Base oil | Kinematic viscosity (mm²/s) | | Worked penetration | Specific gravity | Oxidation stability (kPa) | Torque characteristics |
| | | | | 40°C | 100°C | | | | |
| Inventive Example | 1 | PTFE | (Linear) PFPE | 65 | 15 | 265 | 1.98 | 5 | ○ |
| Inventive Example | 2 | PTFE | (Linear) PFPE | 350 | 39.3 | 240 | 1.90 | Unmeasured | × |

As shown in Table 2 above, the greases used in the rolling bearings of Inventive Example No. 1 and Inventive Example No. 2 were both prepared from materials specified in the present invention, and the worked penetrations were also within the range specified in the present invention. Further, in the rolling bearing of Inventive Example No. 1, the kinematic viscosity of the base oil was within the preferred range specified in the present invention, and therefore excellent results were obtained with regard to torque characteristics.

Although various embodiments have been described above, it is needless to say that the present invention is not limited to these examples. It is apparent to those skilled in the art that various changes or modifications can be conceived within the scope described in the claims, and it is understood that the changes or modifications naturally fall within the technical scope of the present invention. In addition, the components described in the above embodiments may be combined in any manner without departing from the spirit of the invention.

The present application is based on a Japanese patent application (No. 2023-087250) filed on May 26, 2023, contents of which are incorporated herein by reference.

### REFERENCE SIGNS LIST

1 rolling bearing
3 inner ring
5 outer ring
7 ball (rolling element)
9 cage
11 shield

## Claims

1. A rolling bearing in which grease containing a base oil and a thickener is sealed, wherein
the base oil contains a fluorine oil,
the thickener contains a polytetrafluoroethylene resin powder, and
a worked penetration of the grease is 200 or more and 295 or less.

2. The rolling bearing according to claim 1, wherein a kinematic viscosity of the base oil at 40°C is 10 mm²/s or more and 200 mm²/s or less.

3. The rolling bearing according to claim 1, wherein the fluorine oil is perfluoropolyether.

4. The rolling bearing according to claim 1, wherein a content of the thickener with respect to a total mass of the grease is 30% by mass or more and 50% by mass or less.

5. The rolling bearing according to claim 1, wherein a specific gravity of the grease is 1.50 or more.

6. The rolling bearing according to claim 1, wherein an oxidation stability of the grease is 10 kPa or less.

7. The rolling bearing according to any one of claims 1 to 6, wherein the rolling bearing is used in an environment exposed to an atmosphere containing at least one of hydrogen peroxide and peracetic acid.

8. The rolling bearing according to any one of claims 1 to 6, wherein the rolling bearing is included in a device used in a regenerative medicine field.

9. An actuator comprising:
the rolling bearing according to any one of claims 1 to 6;
a ball screw supported by the rolling bearing; and
a linear guide configured to guide a moving direction of a member moved by the ball screw.

10. The actuator according to claim 9, wherein a low-temperature chromium fluoride plating film is formed on a surface of the ball screw and a surface of the linear guide.

11. The actuator according to claim 9, wherein the actuator is used in an environment exposed to an atmosphere containing at least one of hydrogen peroxide and peracetic acid, and is not provided with a cover that covers the rolling bearing, the ball screw, and the linear guide.
